# EUROPEAN PATENT SPECIFICATION

(11) **EP 1 535 383 B1**
(45) Date of publication and mention of the grant of the patent: **13.04.2011**
(21) Application number: 03761873.3
(22) Date of filing: 27.06.2003
(51) Int. Cl.: H02H 5/04, G05D 23/20

(54) **TEMPERATURE MONITORING SYSTEM FOR ELECTRICAL EQUIPMENT**
TEMPERATUR BERWACHUNGSSYSTEM FÜR ELEKTRISCHE GERÄTE
SYSTEME DE CONTROLE DE TEMPERATURE POUR MATERIEL ELECTRIQUE

(30) Priority: 28.06.2002 NO 20023138
(43) Date of publication of application: 01.06.2005
(73) Proprietor: EL-WATCH AS, 6657 Rindal (NO)
(72) Inventor: SKJERMO, Tor, Öistein, N-6657 Rindal (NO); FURUHAUG, Ole, N-6658 Rindalsskogen (NO)
(74) Representative: Khan, Mohammed Saiful Azam
(86) International application number: PCT/NO2003/000221
(87) International publication number: WO 2004/003497

(56) References cited:
- WO-A1-92/16979
- DD-A1- 249 794
- FR-A1- 2 772 438
- PATENT ABSTRACTS OF JAPAN vol. 17, no. 165 (E-1343) 30 March 1993 & JP 04 325 819 A (MITSUBISHI CABLE IND LTD) 16 November 1992

## Description

The present invention relates to a temperature monitoring system for electrical equipment, such as electrical conductors and cables, connection points, fuses etc, as stated in the introduction of claim 1.

### Background of the invention

Every year, fire causes huge economic losses, and many of the fires break out because of defects in electrical equipment. A frequent reason for fires is that serial flame arcs arise in connection points in electrical equipment. Even if not every flame arc causes fire, they can create such extent of damage to electrical equipment that it can not be used. In industry, such down times result in huge economic losses.

Serial flame arcs arise when the electrical contact in the connection is poor. The first sign of poor contact is overheating. If this overheating continues, corrosive gases are formed, which result in increased connection resistance in the connection. After a while, the resistance will be so large that a flame arc appears. The flame arc can be very warm and can easily set fire to flammable objects nearby.

Accordingly, there have been several attempts to monitor and notify any overheating in electrical equipment.

Patent publication WO 99/30400 discloses a conductor with one or more temperature sensors, the object of which is to detect excessive temperature along all parts of the conductor. The sensors used change their impedance as a consequence of temperature changes. The conductor is connected to a controller unit monitoring and notifying any failures or failure indications. This is done by comparing a detected voltage with a reference voltage, resulting in a decision whether there are areas of overtemperature in the conductor. The conductor should also prove mechanical damages on the conductor and distinguish between different error types in the conductor. The conductor should also be able to detect "weak/small" flame arcs.

The disadvantage of such a conductor is primarily the large cost. If a failure in a sensor occurs, the conductor has to be replaced completely or partially. Further, a later installation in an already existing electrical installation is demanding, and an disconnection of the power supply is required.

US patent specification 4,858,054 discloses a failure detection system. The system disconnects the electrical installation completely or partially if a failure is detected. The disconnection is done by means of triacs trigged by an increased transition resistance extending the changed resistance occuring at transient overload. Specially, there is disclosed thermistors with negative temperature coefficients mounted near connection points to detect overtemperature.

The disadvantage of this invention is the same as with fire; the disconnection occurs without any type of notification. This has consequences for production plants with long shutdown times and start-up times, where a sudden disruption can cause long lasting operation closedown and consequently high costs. Additionally, the triacs will not be powerful enough for use in larger industrial installations.

Patent publication WO 99/33155 discloses a method for protection of an electrical installation against serial failure. The invention comprises detection of overtemperature at specific places of the installation by means of individual sensors/switch units connected to the installation and results in disruption in the power supply when the overtemperature reaches a threshold value. The disruption is caused by an electrical fuse element located close to the connection(s) being monitored. At high temperatures the fuse element melts and provides for contact, thereby causing control signals to disrupt the electrical power supply.

The disadvantage of this invention is that danger is notified through the ground connection. Since a lot of electrical installations have permanent earth faults this is a unreliable method, moreover, for a heat notification, it will be demanding to find the place in the installation where the failure has occured. Another temperature monitoring system is disclosed in JP-A-04325819.

### Object of the invention

The main object of the present invention is to provide a monitoring system for electrical installations which notifies when a failure indication is detected. It is an object that the invention can easily be adapted to individual electrical installation and that it is cheaper than other existing solutions.

Further, it is an object of the present invention that the adaption to the individual electrical installation is done both by means of selections of the connection being monitored and also by the parameters being monitored.

Further, it is an object of the present invention that it shall be able to detect the temperature of connection points and notify when the temperature is to high and it shall be able to show how high the temperature is on the different connection points.

Further, it is an object of the present invention to measure the difference between comparable circuits, since this is a frequent indication of an error condition.

In further embodiments the invention is able to generate and store a log for the measurements and can also transfer data to a central unit by means of radio signals.

In further embodiments the invention can be connected to a GSM module sending a message with error conditions directly to service personnel.

### The invention

The invention is stated in the characterizing part of claim 1, as the independent claims define alterative embodiments of the invention.

### Example

In the following, embodiments of the invention will be described by way of example, with reference to the enclosed drawings, where:
Fig. 1a shows a perspective view from above of a monitoring device according to the invention; .
Fig. 1b shows the monitoring device from below;
Fig. 1c shows the monitoring device from the side;
Fig. 2 discloses how the monitoring device and a controlling device can be installed in a fuse terminal box;
Fig. 3 shows a connection diagram for a monitoring device according to the invention;
Fig. 4 shows the signals in and out from the processor in the controlling device;
Fig. 5 shows the signals on the data bus; and
Fig. 6a and 6b show a second embodiment of the invention, a cross sectional view and a side view respectively.

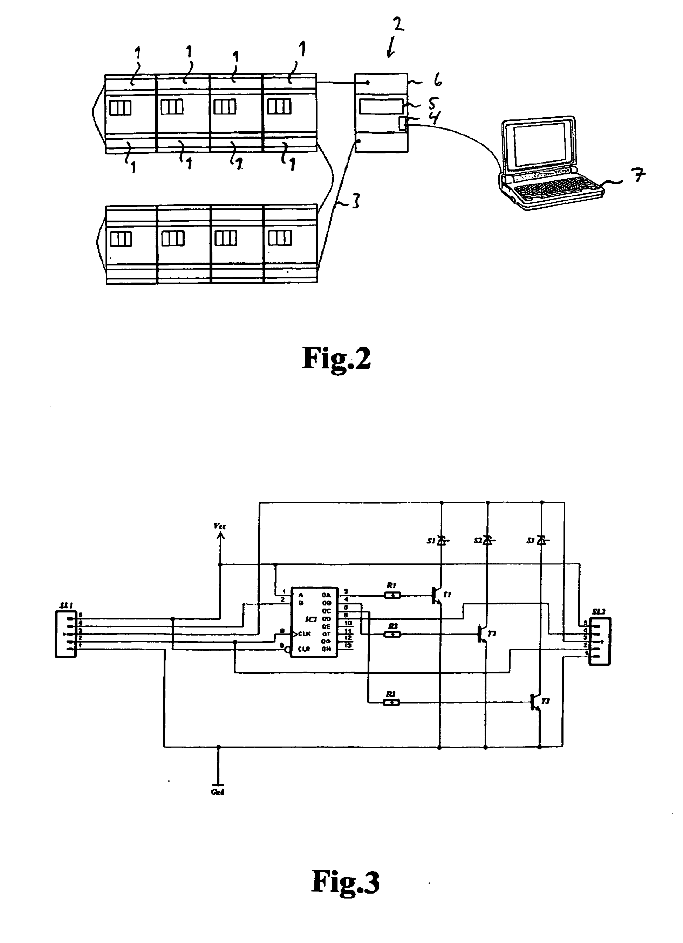

The present invention comprises one or more monitoring devices 1 and one or more controlling devices 2. In the present embodiment connection point on fuses of the DIN-standard in a fuse terminal box are monitored, such that preferably two monitoring devices are applied to each fuse. In fig. 2, sixteen monitoring devices 1 are serially connected to a controlling device 2 via a data bus 3.

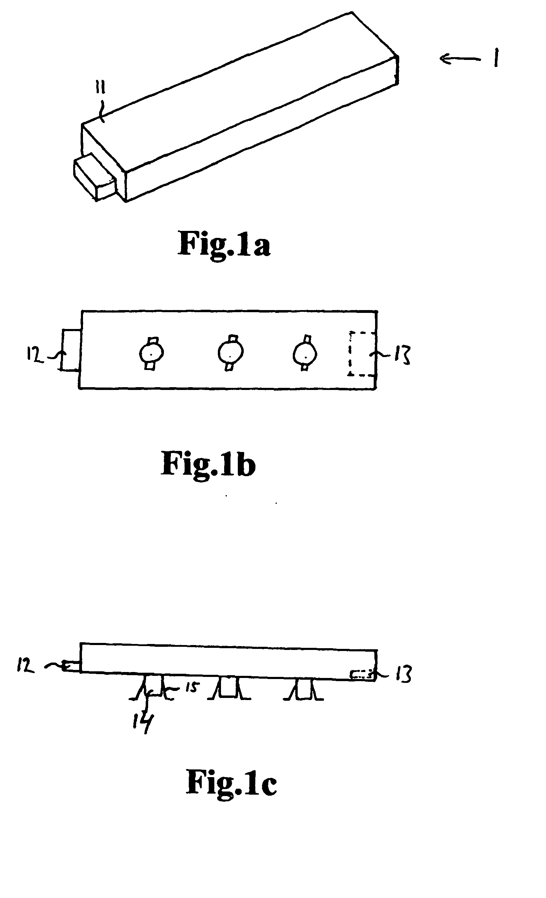

The monitoring device 1 will now be described by reference to fig. 1a - c and fig. 2. The monitoring device comprises a housing 11, two contacts 12, 13 connected to a printed circuit board, sensors 14 and fastening devices 15. Three sensors and three fastening devices are shown as this monitoring device is meant for a three-phase fuse. In the same way one monitoring device can have two or more sensors and fastening devices for a two-phase fuse and a one-phase fuse respectively. The width of the monitoring device is adapted to the width of the actual fuse. The housing 11 is preferably made of a plastic material protecting the printed circuit board against impacts, dust, humidity etc. It can be made of an electromagnetically protecting material.

The contacts 12, 13 can, for example be a male contact 12 and a female contact 13 of known type. The monitoring devices are meant to be used in such a way that the male contact 12 is connected to the female contact 13 of a next monitoring device. Alternatively, the contacts 12, 13 can be knife contacts or similar, providing that two monitoring devices can be bent downwardly and upwardly in relation to each other without losing electrical contact. This is preferable during the installation of the monitoring devices on the fuses.

In this embodiment the sensors 14 are heat sensitive constant current sources of type LM355 from National Semiconductor, providing an analogue voltage signal varying with temperature. NTC-sensors ( Negative Temperature Coefficient) are also suitable for this purpose. The sensors 14 protrude under the monitoring device and, thereby extend a distance down into the opening over the connection point in the fuse. In this embodiment the heat sensitive constant current source LM355 is chosen particularly because of the favourable costs. There are better and more accurate sensors, but this will affect the price of the monitoring device. The price for more advanced sensors, for example infrared sensors etc, is constantly decreasing, therefore, the future choice of sensor can change.

The distance between each sensor and related connection point will be larger than the distance between two adjacent connection points. In a use situation potential flame arcs will occur between two connection points rather than between the connection point and the sensor. An electrically isolating and heat conducting gel can be placed between the sensor and the connection point. Further, an electrically isolating housing (not shown) can be arranged around the sensor.

The fastening device 15 can be of many different types. In this embodiment the fastening device comprises two flexible plastic tongues, which in their upper end are fastened to protrude from the underside of the housing 11 at each sensor 14. At their outermost end, the plastic tongues have an outwardly directed bend. When the fastening device is pressed into the opening above the connection point, an interference fit will occur and hold the monitoring device in a fixed distance in relation to the fuse. Other fastening devices are of course possible, such as double sided adhesive tape, glue, screwed connections etc.

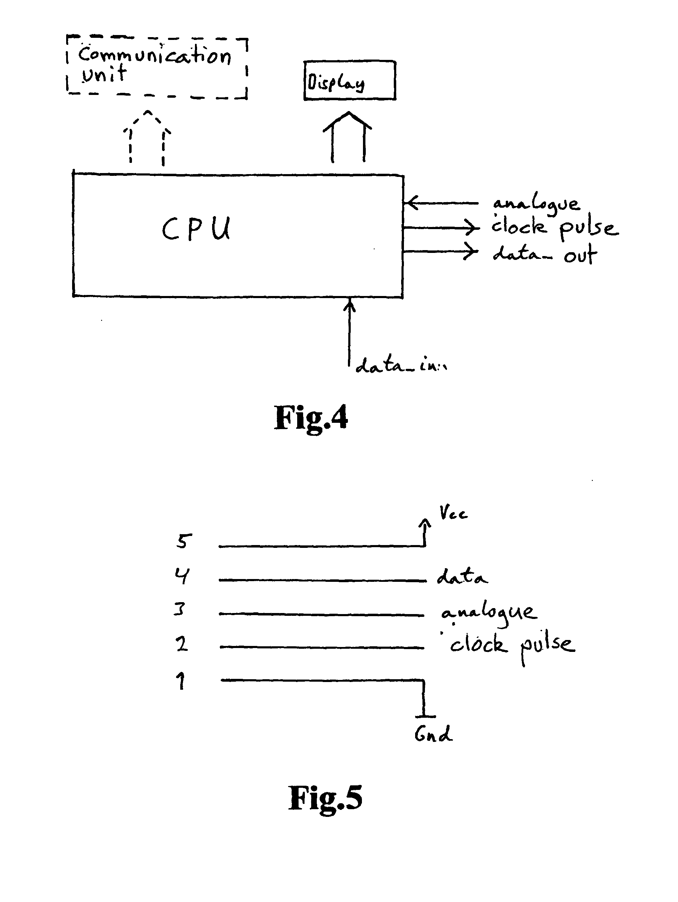

In the present embodiment, the bus 3 comprises five conductors transmitting the following signals: ground, clock pulse signal, analogue signal, data signal and Vcc. This is shown in fig. 5. The data bus transfers signals from the controlling device 2 through all the monitoring devices and then back to the controlling device again. The monitoring devices placed next to each other carry, or contains, the data bus via the contacts 12, 13, while the data bus is carried, or contained by means of a signal cable between two rows of monitoring devices and alternatively also from the first and the last monitoring devices to the controlling device, as shown by fig. 2.

The controlling device 2 comprises a power supply unit (not shown), an external port 4, a display 5 and a processor CPU located in a housing. The housing, having the same size as a fuse, is mounted next to the fuses in the fuse terminal box. The power supply unit comprises a transformer and supplies the monitoring devices and controlling device with electrical energy via the data bus 5. The external port 5 can, for example, be a parallel port or an USB port for programming the processor by means of a computer. This will be further described below.

The processor (the CPU) is shown in fig. 4, having two outsignals; a clock pulse signal and a data_out signal. In this embodiment the processor is an AT90S8535 (ATMEL) including an A/D converter. The analogue signal, which represents the temperature of the sensors, enters the A/D converter of the processor. Further, an 8 bits signal leads to a display, to notify the condition of the system. In an embodiment the processor can be coupled to a communication unit to communicate with other monitoring devices or a central monitoring station.

The printed circuit board in the monitoring device 1 will now be described with reference to fig. 3. SL1 represents the contact 12, SL2 represents the contact 13, IC1 is a shift register of type 74164D (Phillips) and R1, R2 and R3 are conventional electrical resistors while T1, T2 and T3 are transistors of type BC847C (Phillips). S4, S5 and S6 represents the sensor LM 335 (National Semiconductor). The numbers on SL1 and SL2 refer to the numbering of the signals on the data bus as described above. It will be obvious for the person skilled in the art how to achieve the invention from this schematic drawing.

In the following the operation of the invention will be described. At the installation of the system the controlling device 2 is preferably connected to the fuse terminal box adjacent to the fuses. In fig. 3 a fuse terminal box with eight fuses in two rows is shown. Further, the monitoring devices 1 are installed next to each other, the contact 12 connected to the contact 13 of the following monitoring device and so on. In principle there are three types of monitoring devices, one for each of one, two or three phase fuses. When the upper part of the first row of fuses is filled, the installation is continued in the same way along the lower part of the first row of fuses. The monitoring device outermost on the upper part of the first row is connected to the monitoring device outermost on the lower part of the first row of fuses by means of a five conductor data bus 3 comprising contacts adapted to the contacts 12, 13. In the end the lowest monitoring device is connected to the controlling device by means of a second five conductor data bus 3. The last mentioned data bus 3 is not absolutely necessary, but does to a great extent provide fault localization and control of the system.

Next, the processor is programmed via a user interface on a computer connected to the external port 5. The number of connection points is entered, together with the number of each connection point and the related electrical circuit. Since a return conductor is coupled from the rows of fuses, it is simply just necessary to enter the number of fuses on each row, alternatively also with a name for each fuse. At the same time the corresponding connection points, the difference between which is to be monitored, are entered. Finally, temperature thresholds, difference thresholds, frequency of measurements etc are entered.

In normal operation the clock pulse is at a frequency of 1 kHz. When the program instructs the processor to make a measurement, a data signal is sent. This data signal results in that a first sensor S4 on the first monitoring device being trigged by the related transistor T1. The temperature detected by the sensor S4 is read from the processor as the analogue signal. This analogue voltage level is digitalized by means of the A/D converter of the processor, and a temperature, for example 20 °C, is computed by means of an algorithm stored in the processor. This temperature value is stored in a temporary storage in the processor. At the next clock pulse the shift register is shifted to the next output, such that the data signal proceeds to the next sensor S5 of the monitoring device via the transistor T2 and R2. The resulting analogue signal from the sensor S5 is registered and stored in the processor as a temperature value in the same way as above. At the next clock pulse the shift register shift again to the next output, such that the data signal proceeds to the next sensor S6 of the monitoring device via the transistor T3 and R3. The resulting analogue signal from the sensor S6 is registered and stored in the processor as a temperature value in the same way as above.

At the next clock pulse the shift register shifts to the next output, which makes the data signal proceed to the next monitoring device. This above described procedure is repeated for all the monitoring devices such that all temperatures on all connection points are registered.

Preferably, the data signal is lead in on the data_inn input of the processor. In this way, the processor can check if the number of registered measurements is equal to the number of sensors.

Thereafter, the processor compares the registered temperature values with the reference values. The processor can also check if the individual phases on the same fuse have a higher temperature than the other. Generally, this is a failure indication, even if the measured temperature is far below the temperature indicating a risk of fire.

The processor can also compare the measured temperature values with historical data, and check if there are any indications of temperature development as time goes on. This requires extra memory, for example RAM chips installed in the controlling device. The historical data can also be stored in a central storage unit if the controlling device is connected to one via a communication unit.

If an error has occured it will be notified for example via the display or via the communication unit shown in fig. 4, such that an initiative can be done to correct the failure and thereby prevent fire and damage to the installation.

### Modifications

The embodiment according to the invention is described with regard to fuses according to the DIN standard, but it will be obvious for a man skilled in the art to adapt the invention to other standards and other equipment. It will also be easy to provide the invention with other functions.

It is for example possible to provide the data bus with a three conductor data bus. Then another type of temperature sensor is required, for example DS 1820 (Dallas Semiconductor). This is a digital temperature measuring device which only needs voltage supply and one data conductor, and it has a built-in 64 bit unique serial number for identification. Today, this type of sensor is more expensive and slower than the sensor chosen in the embodiment above.

It is also possible to provide the invention with a data bus with more than five conductors. The invention will then be able to have even more functions. For example the temperature sensor described in the embodiment above has one pin for calibration which is not used. Further, each individual monitoring device can be provided with a LED (light emitting diode), which the processor controls to light if a failure is detected on the related fuse.

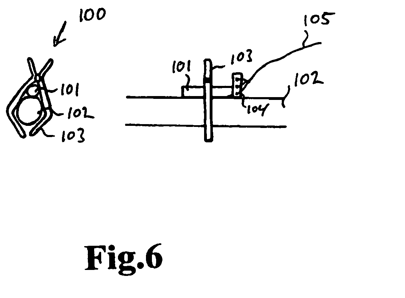

In another embodiment the invention is used to monitor temperature in electrical conductors or larger knife fuses (fig. 6a and 6b). To accomplish this, a monitoring device 100 comprising a temperature sensor 101 is fastened to an electrical cable 102 or knife fuses by means of a fastening device 103, such as for example a clip etc. The modular unit also here comprises contacts 104 for connection to a data bus 105. Preferably, the sensors are a DS 1820 as mentioned above, connected serially together with as many sensors as desired and with desired mutual distance by means of a three conductor data bus and in the end connected to a processor as described above. Even this embodiment can obviously be adapted to different types of cables and to different number of cables as desired, and can also be combined with monitoring of connection points by means of the monitoring devices described above.

## Claims

1. Temperature monitoring system for monitoring the temperature in electrical connection points, such as fuses etc, comprising one ore more temperature sensors (14) connected to a processor or other temperature sensors (14) via a data bus (3), where the processor is able to read signals from the temperature sensors (14) and from given conditions notify if a failure is detected, temperature sensors (14) being located in modular units (1), where each unit comprises et least one fastening devices (15), for fastening of each modular unit (1) in relation to the connection point, thereby resulting in each of the temperature sensors in the modular unit (1) being held in a fixed position in relation to the connection points where temperature is to be monitored, and with electrical contacts (12, 13) for releasably connection, directly to, or via conductors of the data bus (3) to other modular units (1) or the processor, **characterized in that** the fastening device comprises a resilient element (15) to be releasably introduced into an opening over a connection point in a fuse, said resilient element (15) being connected on one side of the modular unit (1) and incorporating a temperature sensor (14).

2. System according to claim 1, **characterized in that** the fastening device (15) comprises one or more flexible tongues, capable of being received in the opening over the connection point in a fuse.

3. System according to claim 2, **characterized in that** the fastening device comprises a pair of juxtaposed tongues (15) with an outwardly bend at the end, which bends are provided to engage with the wall of the opening over a connection point, to hold between them the temperature sensor (14) in a fixed distance to the element to be monitored.

4. System according to one of the claims 1-3, **characterized in that** each monitoring device (1) comprises at least two temperature sensors (14) with associated fastening devices (15).

## Patentansprüche

1. Temperaturüberwachungssystem zur Überwachung der Temperatur an elektrischen verbindungspunkten, wie etwa Sicherungen usw., mit einen oder mehreren Temperatursensoren (14), die mit einem Prozessor oder über einen Datenbus (3) mit anderen Temperatursensoren (14) verbunden sind, wobei der Prozessor in der Lage ist, Signale aus den Temperatursensoren (14) auszulesen und aus gegebenen Bedingungen benachrichtigen kann, wenn ein Fehler erfasst wird, wobei die Temperatursensoren (14) in modularen Einheiten (1) angeordnet sind, wobei jede der Einheiten zumindest eine Befestigungsvorrichtung (15) umfasst, um jede modulare Einheit (1) in Bezug auf den Verbindungspunkt zu befestigen, was dazu führt, dass jeder Temperatursensor in der modularen Einheit (1) an einer festen Position im Bezug auf die Verbindungspunkte gehalten wird, an denen die Temperatur zu überwachen ist, und mit elektrischen Kontakten (12, 13) für eine lösbare Verbindung direkt oder über Leiter des Datenbus (3) mit anderen modularen Einheiten (1) oder dem Prozessor, **dadurch gekennzeichnet, dass** die Befestigungsvorrichtung ein elastisches Element (15) umfasst, um lösbar in eine Öffnung über einem Verbindungspunkt in einer Sicherung eingeführt zu werden, wobei das elastische Element (15) mit einer Seite der modularen Einheit (1) verbunden ist und einen Temperatursensor (14) enthält.

2. System nach Anspruch 1, **dadurch gekennzeichnet, dass** die Befestigungsvorrichtung (15) eine oder mehrere flexible Zungen umfasst, die in der Lage sind, in Öffnungen über dem Verbindungspunkt in einer Sicherung aufgenommen zu werden.

3. System nach Anspruch 2, **dadurch gekennzeichnet, dass** die Befestigungsvorrichtung ein paar gegenüberliegender Zungen (15) mit einer nach oben gerichteten Biegung an ihren Enden aufweist, wobei die Biegungen vorgesehen sind, um mit der Wand der Öffnung über dem Verbindungspunkt den Eingriff zu gelangen, um zwischen ihnen den Temperatursensor (14) mit einem festen Abstand zu dem zu überwachenden Element zu halten.

4. System nach einem der Ansprüche 1 bis 3, **dadurch gekennzeichnet, dass** die Überwachungsvorrichtung (1) zu mindest zwei Temperatursensoren (14) mit zugehörigen Befestigungsvorrichtungen (15) umfasst.

## Revendications

1. Système de contrôle de température pour contrôler la température en des points de connexion électrique, tels que des fusibles, etc., comprenant un ou plusieurs capteurs de température (14) connectés à un processeur ou à d'autres capteurs de température (14) par l'intermédiaire d'un bus de données (3), où le processeur est capable de lire les signaux provenant des capteurs de température (14) et, à partir de conditions données, de signaler si une panne est détectée, les capteurs de température (14) étant situés dans des unités modulaires (1), où chaque unité comprend au moins un dispositif de fixation (15), pour la fixation de chaque unité modulaire (1) en relation avec le point de connexion, résultant de ce fait en ce que chacun des capteurs de température dans l'unité modulaire (1) est maintenu à une position fixée en relation avec les points de connexion où la température doit être contrôlée, et avec des contacts électriques (12, 13) pour une connexion libérable, directement, ou par l'intermédiaire de conducteurs du bus de données (3), à d'autres unités modulaires (1) ou au processeur, **caractérisé en ce que** le dispositif de fixation comprend un élément élastique (15) destiné à être introduit de manière libérable dans une ouverture sur un point de connexion dans un fusible, ledit élément élastique (15) étant connecté d'un côté de l'unité modulaire (1) et incorporant un capteur de température (14).

2. Système selon la revendication 1, **caractérisé en ce que** le dispositif de fixation (15) comprend une ou plusieurs languettes flexibles, capables d'être reçues dans l'ouverture sur le point de connexion dans un fusible.

3. Système selon la revendication 2, **caractérisé en ce que** le dispositif de fixation comprend une paire de languettes (15) juxtaposées qui sont courbées vers l'extérieur à leur extrémité, lesquelles parties courbées sont prévues pour venir en prise avec la paroi de l'ouverture sur un point de connexion, pour maintenir entre elles le capteur de température (14) à une distance fixée de l'élément à contrôler.

4. Système selon l'une des revendications 1 à 3, **caractérisé en ce que** chaque dispositif de contrôle (1) comprend au moins deux capteurs de température (14) avec des dispositifs de fixation (15) associés.
